# EUROPÄISCHE PATENTSCHRIFT

(11) **EP 0 633 291 B1**
(45) Veröffentlichungstag und Bekanntmachung des Hinweises auf die Patenterteilung: **20.05.1998**
(21) Anmeldenummer: 94110401.0
(22) Anmeldetag: 04.07.1994
(51) Int. Cl.: C08L 27/12, B29D 23/00, F16C 1/26

(54) **Abriebbeständige Fluorpolymer-Mischungen**
Abrasion-resistant fluoropolymer mixtures
Mélanges polymères fluorés résistants à l'abrasion

(30) Priorität: 10.07.1993 DE 4323121
(43) Veröffentlichungstag der Anmeldung: 11.01.1995
(73) Patentinhaber: Ticona GmbH, 65926 Frankfurt am Main (DE)
(72) Erfinder: Scheckenbach, Helmut, D-63225 Langen (DE); Schleicher, Andreas, Dr., D-64683 Einhausen (DE); Kulpe, Jürgen, Dr., D-65929 Frankfurt (DE); Neumann, Wolfgang, D-84559 Kraiburg (DE); Jansen, Bernd, D-84547 Emmerting (DE)

(56) Entgegenhaltungen:
- EP-A- 0 199 991
- EP-A- 0 356 948
- EP-A- 0 432 911
- EP-A- 0 633 290
- DATABASE WPI Week 8515, Derwent Publications Ltd., London, GB; AN 85-089682 & JP-A-60 038 465 (SUMITOMO CHEMICAL KK) 28. Februar 1985

## Beschreibung

Die Erfindung betrifft hochwirksame, abriebbeständige Polymer-Zusammensetzungen auf Basis von Fluorkohlenstoffpolymeren mit erheblich verbesserten Langzeiteigenschaften, insbesondere für Antifriktionsschläuche, z.B. Futterrohre für Bowdenzüge. Sie werden hergestellt aus Mischungen von Fluorpolymeren, z.B. Polytetrafluorethylen (PTFE) und oxidierten Polyarylensulfiden.

Fluorpolymere sind seit längerer Zeit bekannt. Sie zeichnen sich durch eine hohe Wärme- und ausgezeichnete Chemikalienbeständigkeit aus. Neben der hohen Zähigkeit zeigen aber sowohl die thermoplastisch verarbeitbaren als auch die thermoplastisch nicht verarbeitbaren Fluorpolymere eine ausgeprägte Kriechneigung auf. Zudem sind die tribologischen Eigenschaften von Fluorpolymeren in vielen Anwendungen nicht ausreichend.

In der Literatur sind Additive, beispielsweise auf Basis von Polyesterverbindungen, beschrieben, die entweder die Kriechneigung oder den Abrieb von Fluorpolymeren verbessern (JP-A 58019397). Sie bergen jedoch folgende Nachteile:
1. die Polyesterverbindungen zersetzen sich bei den Verarbeitungstemperaturen der Fluorpolymere,
2. aufgrund der schlechten Mahlbarkeit ihrer Mischung ergibt sich eine schlechte Homogenisierung und
3. der Zusatz der bisher bekannten Additive setzt die Chemikalienresistenz der Fluorpolymere stark herab.

Letzeres gilt auch für die aromatischen Polysulfone, wie sie in der Literatur beschrieben sind (DE-A 24 18 282, JP-A-60-038465, EP-A-0 432 991, JP-A-60-038 465 und EP-A-0 199 991). In diesen Fällen werden Polymere angeführt, die in bekannten organischen Lösemitteln wie Dimethylformamid oder Dichlormethan löslich sind.

Die EP-A-0 199 991 beschreibt Mischungen eines bestimmten Fluorpolymeren, nämlich eines Extra-hoch Molekulargewichts fluorierten Ethylen-Propylen-Copoylmers mit mindestens einem weiteren Polymer, z.B. einem Polysulfon oder einem Polyphenylensulfid. Das Dokument enthält keine näheren Angaben über das zu verwendende Polysulfon Aus keiner Stelle der Schrift kann jedoch ein Hinweis auf die Abriebfestigkeiten der betreffenden Polymermischungen entnommen werden.

Bekannt ist ferner eine härtbare Mischung aus mit Wasserstoffperoxid behandeltem Polyphenylensulfid und einem Pigment, die 13 % Polytetrafluorethylen enthält (US-A 3,948,865). Sie dient zur rißfreien Beschichtung von Aluminium, die in kurzer Zeit gehärtet werden kann. Das Polytetrafluorethylen dient in diesem Falle nur als Füllstoff.

Bekannt sind auch röhren- bzw. schlauchförmige Produkte, die aus Mischungen von Polytetrafluorethylen und einem Polyarylensulfid und gegebenenfalls Füllstoffen bestehen und ausgezeichnete Gleit- und Reibeigenschaften aufweisen sollen (US-PS 4,362,069). Es werden bevorzugt PTFE-Polymere für Pastenextrusion sowie als Polymerzusatz ein Anteil von etwa 5 bis 25 Gew.-% lineares oder verzweigtes Poly-p-phenylensulfid verwendet. Nachteilig ist bei diesen Mischungen die geringe Chemikalienbeständigkeit, das eingeschränkte Abriebverhalten und die mangelnde Temperaturbeständigkeit der eingesetzten Polyarylensulfide.

Es bestand daher die Aufgabe, Zusammensetzungen auf Basis von Fluorpolymeren mit besonders niedrigem Abrieb zu entwickeln, die die im Stand der Technik beschriebenen Nachteile zu vermeiden nicht aufweisen, bzw. die bisher beschriebenen Eigenschaften übertreffen.

Die Erfindung betrifft deshalb extrudierte schlauchförmige Produkte, die aus einer Mischung aus
A) 75 bis 99 Gew.-% mindestens eines Fluorkohlenstoffpolymers und
B) 1 bis 25 Gew.-% mindestens eines Oxidierten Polyarylensulfids, das ein lineares oder verzweigtes Polyarylensystem (Mw: 4.000 - 200.000) mit der wiederkehrenden Einheit der Formel

   -[(Ar¹)_{d}-X]ₑ-[(Ar²)ᵢ-Y]ⱼ-[(Ar³)ₖ-Z]ₗ-[(Ar⁴)ₒ-W]ₚ- (IX)

   ist, das mindestens eine S und/oder SO und/oder SO₂-Gruppe als Bindeglied enthält und eine zu den jeweils eingesetzten Fluorpolymeren adäquate Wärmebeständigkeit aufweist, wobei Ar¹, Ar², Ar³, Ar⁴, W, X, Y und Z unabhängig voneinander gleich oder verschieden sind, die Indizes n, m, i, j, k, l, o und p ganze Zahlen von 0 bis 4 sind, wobei ihre Summe mindestens 2 ergeben muß, Ar¹, Ar², Ar³ und Ar⁴ für einfache oder direkt para-, meta- oder orthoverknüpfte Arylensysteme mit 6 bis 18 C-Atomen stehen und W, X, Y und Z Verknüpfungsgruppen darstellen, ausgewählt aus -SO₂-, -S-, -SO-, -CO-, -CO₂-, Alkyl- oder Alkylidengruppen mit 1 - 6 C-Atomen; mit der Maßgabe, daß Polymere aus der Klasse der Polyethersulfone ausgenommen sind, und, bezogen auf die Summe A) + B),
c) 0 bis 15 Gew.-% eines Füllstoffes bestehen und aufgrund des besonders niedrigen Abriebs eine sehr lange Lebensdauer besitzen. Ihre Verwendung bringt somit wirtschaftliche Vorteile im Hinblick auf Einsparung von eingesetztem Material und Langlebigkeit.

Es war überraschend, daß durch den Zusatz von oxidierten Polyarylensulfiden, das sind beispielsweise Polyarylensulfone und/oder Polyarylensulfid-copolymere, die beliebige Anteile von oxidierten Sulfidgruppen enthalten, z.B. S/SO/SO₂-Arylencopolymere, zu thermoplastisch verarbeitbaren oder nicht thermoplastisch verarbeitbaren Fluorpolymeren die Kriechneigung und der Abrieb unter weitestgehendem Erhalt der Chemikalien- und Wärmebeständigkeit verbessert werden. Ferner zeichnen sich derartige Polymermischungen durch sehr gute mechanische Eigenschaften im Zug-Dehnungsversuch aus. Diese Mischungen sind besonders für Anwendungen in Form von extrudierten Schläuchen geeignet, wie sie zur Ummantelung von Bowdenzügen verwendet werden.

Gemäß der Erfindung können folgende Fluorthermoplaste mit wiederkehrenden Einheiten der Formel (I) verwendet werden: 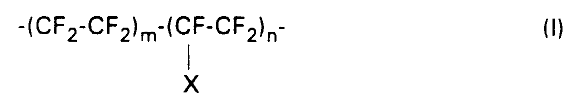 wobei X für O-R steht, mit R als perfluoriertem Alkylrest mit 1 bis 8 C-Atomen, m und n stehen jeweils für Zahlen von 0,01 bis 1, wobei die Summe von m und n 1 ergibt.

Weiterhin können die Mischungen Fluorthermoplaste mit wiederkehrenden Einheiten der Formeln (II) - (IV) enthalten:

-(CF₂-CF₂)ₘ-(CH₂-CH₂)ₙ- (II)

-(CF₂-CF(CF₃))ₘ-(CF₂-CF₂)ₙ- (III)

-(CF₂-C(Cl)F)ₘ-(CH₂-CH₂)ₙ- (IV)

worin m und n die oben genannte Bedeutung besitzen, sowie wiederkehrenden Einheiten der Formel V und VI:

-(CF₂-C(Cl)F- (V)

-CH₂-CF₂- (VI)

Für die Mischungen gemäß der Erfindung sind außerdem thermoplastisch nicht verarbeitbare Fluorpolymere geeignet, die Struktureinheiten der folgenden Formel aufweisen:

-CH₂-CHF- (VII)

-CF₂-CF₂- (VIII)

Es hat sich als vorteilhaft erwiesen, Polytetrafluorethylene zu verwenden, die in Pulverform vorliegen und für Pastenextrusionsverfahren geeignet sind.

Verwendbare Polymere für die Mischungen gemäß der Erfindung sind lineare und verzweigte Polyarylene, die eine zu den jeweils eingesetzten Fluorpolymeren adäquate Wärmebeständigkeit aufweisen, d. h. die beiden Polymere in der Mischung sind unter Verarbeitungsbedingungen stabil.

Besonders geeignete Polymere sind Polyarylene mit wiederkehrenden Einheiten der Formel (X):

[-(S-E-)ₐ-(-SO-E)_{b}-(SO₂-E)_{c}-] (X)

in der E unabhängig voneinander Phenylen, Naphthylen oder Biphenylen bedeutet, b und c unabhängig voneinander Werte von 0 bis 1 darstellen und a Werte von 0 bis kleiner 1 aufweist, mit der Maßgabe, daß die Summe aus a+b+c gleich 1 ist und mindestens zwei der Indices größer Null sind und bei eventuell vorhandenen Schwefelverknüpfungen (-S-) mindestens noch weitere -SO und -SO₂-Verknüpfungen vorliegen.

Speziell einsetzbare Polymere mit wiederkehrenden Einheiten der Formeln (Xl) - (XIII) sind 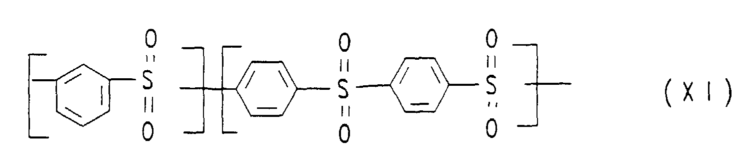 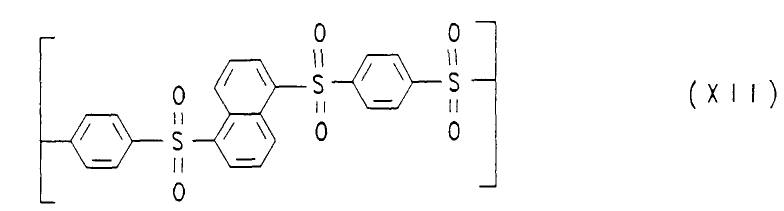 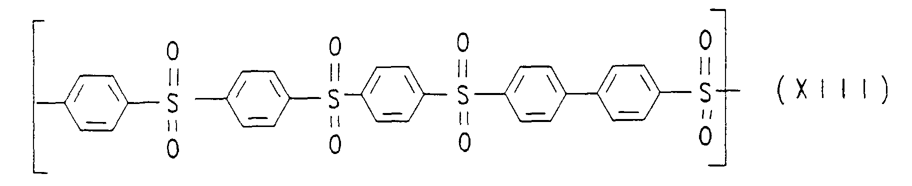 sowie oxidierte Polyphenylensulfide mit wiederkehrenden Einheiten der Formel (IV) 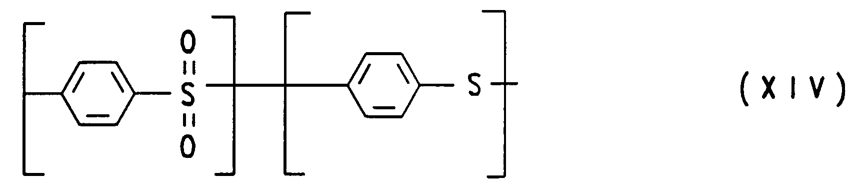 wobei der Sulfonanteil mindestens 65 % beträgt.

Die Herstellung der oxidierten Polyarylensulfide geschieht nach den in den deutschen Patentanmeldungen DE 43 14 737-A1 und DE 43 14 738-A1 vom 4. Mai 1993 beschriebenen Verfahren.

Die Teilchengröße der oxidierten Polyarylensulfate gemäß der Erfindung liegt im allgemeinen bei 3•10⁻⁶ bis 300•10⁻⁶, vorzugsweise 5•10⁻⁶bis 100•10⁻⁶ und insbesondere bei 5•10⁻⁶ bis 50•10⁻⁶ m.

Der Anteil an Polyarylensulfonen oder S/SO/SO₂-Arylencopolymeren beträgt gemäß der Erfindung 1 bis 25 Gew.-%, vorzugsweise 1,5 bis 20 Gew.-% und insbesondere 2 bis 15 Gew.-%. Der Anteil an Fluorpolymeren in den Mischungen gemäß der Erfindung beträgt 75 bis 99 Gew.-%, vorzugsweise 80 bis 98,5 Gew.-% und insbesondere 85 bis 98 Gew.-%, wobei sich die Anteile der beiden Polymere, relativ in Bezug auf die Gesamtpolymer-Mischung auf 100 % ergänzen. Die Mischungen gemäß der Erfindung können ein oder mehrere Fluorpolymere und einen oder mehrere Polyarylensulfone und/oder S/SO/SO₂-Arylencopolymere sowie modifizierte Fluorpolymere, modifizierte Polyarylensulfone oder modifizierte S/SO/SO₂-Arylencopolymere enthalten.

Die Mischungen bestehen insbesondere aus einer Mischung von 85 bis 98 Gew.% Polytetrafluorethylen und 2 bis 15 Gew.-% Polyphenylensulfon oder Polyphenylensulfid-sulfoxid-sulfon-copolymeren.

Gemäß der Erfindung können die Mischungen zusätzlich bis zu 15 Gew.-%, bezogen auf die Summe der Polymermischung, Füllstoffe enthalten. Diese bestehen aus Glas, z. B. Mikroglaskugeln, aus Metall oder aus mineralischen Produkten, die in unterschiedlicher Form vorliegen können.

Bei der Herstellung der geformten Produkte wird die Mischung gemäß der Erfindung nach zwei Verfahren zubereitet. Im ersten Verfahren (a) wird ein Fluorpolymer in Pulverform zusammen mit der Gesamtmenge des einzusetzenden oxidierten Polyarylensulfids in einem Mischer gemischt, wobei die Teilchen keinen Scherkräften ausgesetzt werden dürfen, z.B. einem Taumelmischer. Nach ausreichender Vormischung wird ein Gleitmittel, z.B. ein Kohlenwasserstoffgemisch wie Shell-Sol 100-140 (Hersteller Shell AG, Hamburg, Bundesrepublik Deutschland) zugesetzt und die Mischung bis zur Homogenität weiterbehandelt.

Bei einem weiteren Verfahren (b) wird das oxidierte Polyarylensulfid einer Dispersion des Fluorpolymeren zugegeben. Durch anschließendes Ausrühren werden die beiden Polymere als Gemisch abgeschieden. Die abgeschiedene Polymermischung wird dann mit einem Gleitmittel wie bei Verfahren (a) vermischt.

Die erhaltenen Mischungen aus den Komponenten (A), (B) und gegebenenfalls (C) werden vorverdichtet (Verdichtungsverhältnis 1:3) und anschließend mit Hilfe eines Pastenextrusionsverfahrens zu einer zylindrischen Hohlform bzw. einem Schlauch geformt. Diese so hergestellte Vorform wird dann einer zweistufigen thermischen Behandlung unterworfen. In der ersten Stufe wird das Gleitmittel bei 100 bis 350°C entfernt und anschließend das verbleibende Formteil bei Temperaturen von 260 bis 470° C für 10 Sekunden bis 20 Minuten gesintert. Gegebenenfalls kann sich eine thermische Nachbehandlung bei 260 bis 470° C für 5 Minuten bis 24 Stunden anschließen.

### Beispiele

1) Mischung A':
Es wurde eine Trockenmischung aus 93 Gew.-T. PTFE (®Hostaflon TF 2071, Hoechst AG, Frankfurt a. M., Bundesrepublik Deutschland) und 7 Gew.-T. Polyphenylensulfon (hergestellt wie in der DE-Patentanmeldung 43 14 738 beschrieben) zubereitet. Als Gleitmittel wurden auf 100 Gew.-T. PTFE 20 Gew.-T. Shell-Sol 100-140 zugesetzt.
2) Mischung B' (Vergleichsbeispiel):
93 Gew.-T. PTFE (wie in Mischung A') und 7 Gew.-T. Polyphenylensulfid. Gleitmittelzusatz wie bei Mischung A'.
Die Mischungen A' bzw. B' mit dem Gleitmittel wurden auf einem Extruder, Typ: WP 80/1000, Baujahr 1991 (Worek, Adelsdorf-Neuhaus, Bundesrepublik Deutschland) zu Schläuchen verarbeitet.
Maschinen- und verarbeitungstechnische Daten:

| | |
|---|---|
| Zylinder | 63,5 mm Innendurchmesser |
| Dornstange | 19,0 mm Außendurchmesser |
| Extr.-Düse | 7,0 mm Innendurchmesser |
| Extr.-Dorn | 4,0 mm Außendurchmesser |
| Reduktionsverhältnis (RV) | 111 |
| Temperatur Düse | 30 °C |
| Temperatur Zylinder | 30 °C |
| Temperatur Trockenzone | 290 °C |
| Temperatur Sinterzone | 450 °C |
| | |
| Extrusionsgeschwindigkeit | 0,7 m/min |
| Extrusionsdruck Mischung A' | 135 bar |
| " Mischung B' | 125 bar |

Ein weiterer Gegenstand der Erfindung ist die Verwendung des extrudierten Schlauches, hergestellt aus der Mischung zur Herstellung eines druckfesten Bowdenzuges.
Ferner ist Gegenstand der Erfindung ein Bowdenzug aus einem extrudierten Schlauch und einem Kabel aus Metall innerhalb des extrudierten Schlauches, wobei das Kabel innerhalb des Schlauches bewegbar und mit einem Gleitmittel versehen ist, dadurch gekennzeichnet, daß die Ummantelung des Metallkabels ein extrudierter Schlauch aus der abriebbeständigen Fluorpolymer-Mischung ist.
Die extrudierten Schläuche hatten folgende Endmaße:

| | |
|---|---|
| Innendurchmesser | 3,2 mm |
| Außendurchmesser | 6,5 mm |
| Schrumpf Außendurchmesser | 7,1 % |

Von den Schläuchen gemäß Mischung A' und Mischung B' wurde anschließend der Abrieb nach der "Bowdenzug-Methode" ermittelt:
Hierbei wird auf 2 Vorrichtungen jeweils ein Schlauch zu einem Viertelkreis geformt (Schlauchradius 120 mm). Von diesen 2 Vorrichtungen befindet sich eine in einem Trockenschrank (Versuche bei höheren Temperaturen, hier: 150 °C) und die andere in normaler Umgebung (Versuche bei RT). In den Schläuchen läuft in beiden Vorrichtungen ein Stahlseil, das an seinen Enden mit einer Masse von jeweils 60 kg belastet ist. Dieses Stahlseil (Durchmesser 3 mm, 19 litzig á 0,6 mm) wird mittels eines Zylinders jeweils um 40 mm (Hublänge) abwechselnd in beide Richtungen bewegt (Frequenz: 60 Hübe/min), so daß es zu einem Reibkontakt zwischen Schlauch und Stahlseil kommt. Gemessen wird der Gewichtsverlust der Schläuche nach einer bestimmten Anzahl von Hüben, und zwar bei Raumtemperatur und bei der eingestellten Heizschranktemperatur (150 °C).

| | Abrieb [%] nach 0,5 Mio. Hüben | | Abrieb [%] nach 1,0 Mio Hüben | |
|---|---|---|---|---|
| Beispiele 1 und 2 | bei RT | bei 150° C | bei RT | bei 150° C |
| Schlauch aus Mischung A' | 0,3 | 1,0 | 0,7 | 2,1 |
| Schlauch aus Mischung B' (Vergleich) | 2,0* | 2,8* | - | - |

| | | | | |
|---|---|---|---|---|
| * Nach 30.000 Hüben Durchrieb; Abrieb nach 30.000 Hüben ermittelt. | | | | |

3) Aus den Mischungen A' und B' wurden zusätzlich Schläuche kleineren Durchmessers als vorstehend extrudiert, an denen weitere mechanische Eigenschaften bestimmt wurden. Diese Schläuche wurden auf einem Davis-Electric-Kabelextruder (Davis-Electric Typ: 0-001-796, Wallingford, CT, USA) hergestellt.
Maschinen- und verarbeitungstechnische Daten:

| | |
|---|---|
| Zylinder | 50,8 mm Innendurchmesser |
| Dornstange | 12,7 mm Außendurchmesser |
| Extr.-Düse | 3,35 mm Innendurchmesser |
| Extr.-Dorn | 2,45 mm Außendurchmesser |
| Reduktionsverhältnis (RV) | 463 |
| Temperatur Düse | 50 °C |
| Temperatur Zylinder | 40 °C |
| Temperatur Trockenzone | 150 °C |
| Temperatur Sinterzone | 400 °C |
| Extrusionsgeschwindigkeit | 4 m/min |
| | |
| Extrusionsdruck Mischung A' | 530 bar |
| " Mischung B' | 380 bar |

Diese extrudierten Schläuche hatten folgende Endmaße:

| | |
|---|---|
| Innendurchmesser | 2,0 mm |
| Außendurchmesser | 2,9 mm |
| Schrumpf Außendurchmesser | 13,4 % |

Mit beiden Schläuchen wurden Zugversuche durchgeführt:

| | Reißfestigkeit [%] | | Reißdehnung [%] | |
|---|---|---|---|---|
| Beispiele 3 + 4 | bei RT | bei 200° C | bei RT | bei 200° C |
| Schlauch aus Mischung A' | 94 | 28 | 440 | 210 |
| Schlauch aus Mischung B' (Vergleichsbeispiel) | 96 | 27 | 410 | 190 |

## Patentansprüche

1. Extrudierte zylindrische Hohlform, hergestellt aus einer Fluorpolymer-Mischung bestehend aus
A) 75 bis 99 Gew.-% mindestens eines Fluorkohlenstoffpolymers und
B) 1 bis 25 Gew.-% mindestens eines oxidierten Polyarylensulfids, das ein lineares oder verzweigtes Polyarylensystem (Mw: 4.000 - 200.000) mit der wiederkehrenden Einheit der Formel
-[(Ar¹)_{d}-X]ₑ-[(Ar²)ᵢ-Y]ⱼ-[(Ar³)ₖ-Z]ₗ-[(Ar⁴)ₒ-W]ₚ- (IX)
ist, das mindestens eine S und/oder SO und/oder SO₂-Gruppe als Bindeglied enthält und eine zu den jeweils eingesetzten Fluorpolymeren adäquate Wärmebeständigkeit aufweist, wobei Ar¹, Ar², Ar³, Ar⁴, W, X, Y und Z unabhängig voneinander gleich oder verschieden sind, die Indizes n, m, i, j, k, l, o und p ganze Zahlen von 0 bis 4 sind, wobei ihre Summe mindestens 2 ergeben muß, Ar¹, Ar², Ar³ und Ar⁴ für einfache oder direkt para-, meta- oder orthoverknüpfte Arylensysteme mit 6 bis 18 C-Atomen stehen und W, X, Y und Z Verknüpfungsgruppen darstellen, ausgewählt aus -SO₂-, -S-, -SO-, -CO-, -CO₂-, Alkyl- oder Alkylidengruppen mit 1 - 6 C-Atomen; mit der Maßgabe, daß Polymere aus der Klasse der Polyethersulfone ausgenommen sind, und, bezogen auf die Summe A) + B),
c) 0 bis 15 Gew.-% eines Füllstoffes.

2. Zylindrische Hohlform, hergestellt aus einer Mischung nach Anspruch 1, dadurch gekennzeichnet, daß das Fluorkohlenstoffpolymer Polytetrafluorethylen ist.

3. Zylindrische Hohlform, hergestellt aus einer Mischung nach Anspruch 1 oder 2, dadurch gekennzeichnet, daß der Bestandteil (B) in Mengen von 1,5 bis 20 Gew.-%, vorzugsweise 2 bis 15 Gew.-%, eines Polyarylensulfons und/oder eines Polyarylensulfid-sulfoxid-sulfon-copolymers vorhanden ist.

4. Zylindrische Hohlform, hergestellt aus einer Mischung nach einem oder mehreren der Ansprüche 1 bis 3, dadurch gekennzeichnet, daß der Bestandteil (B) ein Polyarylen mit wiederkehrenden Einheiten der Formel
[-(S-E-)a-(-SO-E)b-(SO₂-E)c-] (X)
ist, in der E unabhängig voneinander Phenylen, Naphthylen oder Biphenylen bedeutet, b und c unabhängig voneinander Werte von größer als 0 bis 1 darstellen und a Werte von 0 bis kleiner 1 aufweist, mit der Maßgabe, daß die Summe aus a+b+c gleich 1 ist und bei eventuell vorhandenen Schwefelverknüpfungen (-S-) mindestens noch weitere -SO- und -SO₂-Verknüpfungen vorliegen.

5. Zylindrische Hohlform, hergestellt aus einer Mischung nach einem der Ansprüche 1 bis 4, dadurch gekennzeichnet, daß der Bestandteil (B) ein Polyphenylensulfon mit wiederkehrenden Einheiten der Formeln 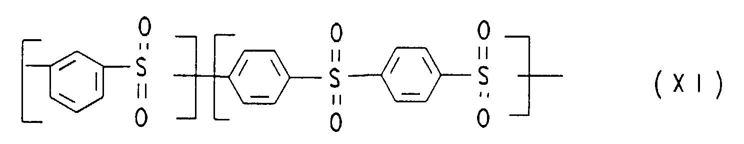 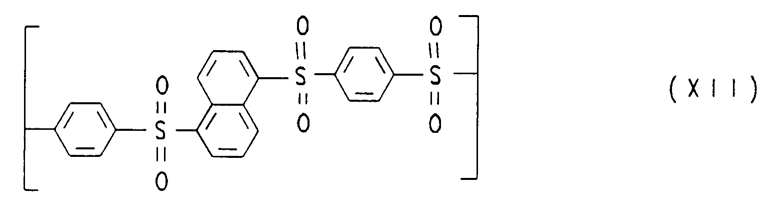 oder 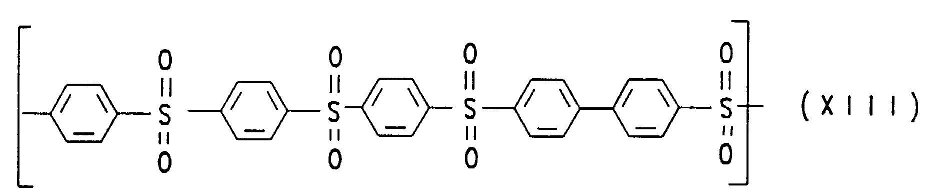 ist.

6. Zylindrische Hohlform, hergestellt aus einer Mischung nach einem der Ansprüche 1 bis 5, dadurch gekennzeichnet, daß der Bestandteil (B) ein oxidiertes Polyphenylen-sulfid der Formel 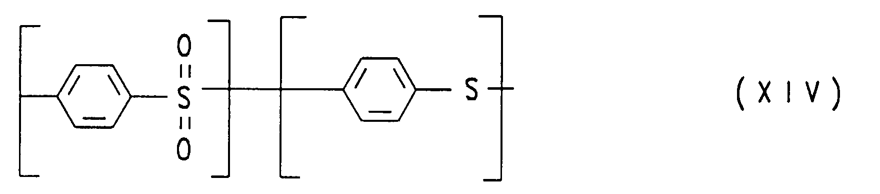 ist, in dem mindestens 65 % der Schwefelatome zu Sulfongruppen oxidiert ist.

7. Zylindrische Hohlform, hergestellt aus einer Mischung nach einem oder mehreren der Ansprüche 1 bis 6, dadurch gekennzeichnet, daß die Teilchengröße der oxidierten Polyarylensulfide 3•10⁻⁶ bis 300•10⁻⁶ m beträgt.

8. Zylindrische Hohlform, hergestellt aus einer Mischung nach einem oder mehreren der Ansprüche 1 bis 7, dadurch gekennzeichnet, daß der Gehalt an Füllstoff/Füllstoffen 5 bis 13 Gew.-% beträgt.

9. Zylindrische Hohlform, hergestellt aus einer Mischung nach einem oder mehreren der Ansprüche 1 bis 8, bestehend aus einer Mischung von 85 bis 98 Gew.% Polytetrafluorethylen und 2 bis 15 Gew.-% Polyphenylensulfon.

10. Zylindrische Hohlform, hergestellt aus einer Mischung nach einem oder mehreren der Ansprüche 1 bis 9, bestehend aus einer Mischung von 85 bis 98 Gew.% Polytetrafluorethylen und 2 bis 15 Gew.-% Polyphenylensulfidsulfoxid-sulfon-copolymeren.

11. Verfahren zur Herstellung einer zylindrischen Hohlform durch Mischen von 75 bis 99 Gew.% Polytetrafluorethylen und 1 bis 25 Gew.-% eines oxidierten Polyarylensulfids, wie in Anspruch 1 beschrieben, Extrudieren der Mischung zu einer Röhren- oder Schlauchform, wobei die Fluor-polymeren nicht aufschmelzen aber fließen, Erhitzen des vorgeformten Produktes auf 100 bis 350° C, um den in der Fluorpolymer-Pastenware enthaltenden Hilfsstoff zu verdampfen, Sintern der Vorform zu einem homogenen Produkt bei 260 bis 470°C für 10 Sekunden bis 20 Minuten, dem sich gegebenenfalls eine Nachbehandlung bei einer Temperatur von 260 bis 470°C für 5 Minuten bis zu 24 Stunden anschließt.

12. Verfahren nach Anspruch 11, dadurch gekennzeichnet, daß nach dem Pastenextrusionsverfahren gearbeitet wird.

13. Verwendung der zylindrischen Hohlform nach einem oder mehreren der Ansprüche 1 bis 10 zur Herstellung eines druckfesten Bowdenzuges..

14. Bowdenzug aus einem extrudierten Schlauch und einem Kabel aus Metall innerhalb des extrudierten Schlauches, wobei das Kabel innerhalb des Schlauches bewegbar und mit einem Gleitmittel versehen ist, dadurch gekennzeichnet, daß die Ummantelung des Metallkabels eine zylindrische Hohlform aus einer abriebbeständigen Fluorpolymer-Mischung gemäß einem oder mehreren der Ansprüche 1 bis 10 ist.

## Claims

1. An extruded cylindrical hollow form produced from a fluoropolymer mixture consisting of
A) 75 to 99% by weight of at least one fluorocarbon polymer and
B) from 1 to 25% by weight of at least one oxidized polyarylene sulfide which is a linear or branched polyarylene system (Mw: 4,000 - 200,000) containing the recurring unit of the formula
-[(Ar¹)_{d}-X]ₑ- [(Ar²)ᵢ-Y]ⱼ-[(Ar³)ₖ-Z]ₗ-[(Ar⁴)ₒ-W]ₚ- (IX)
which contains, as linking member, at least one S and/or SO and/or SO₂ group and has a thermal stability which is appropriate for the fluoropolymers used in each case, where Ar¹, Ar², Ar³, Ar⁴, W, X, Y and Z, independently of one another, are identical or different, the indices n, m, i, j, k, 1, o and p are integers from 0 to 4 whose total must be at least 2, Ar¹, Ar², Ar³ and Ar⁴ are arylene systems which are single or are directly para-, meta- or ortho-linked and have from 6 to 18 carbon atoms, and W, X, Y and Z are linking groups selected from the class consisting of -SO₂-, -S-, -SO-, -CO-, -CO₂- and alkyl or alkylidene groups having from 1 to 6 carbon atoms, with the proviso that polymers of the polyether sulfone class are excluded, and, based on the total A) + B),
C) from 0 to 15% by weight of a filler.

2. A cylindrical hollow form produced from a mixture as claimed in claim 1, wherein the fluorocarbon polymer is polytetrafluoroethylene.

3. A cylindrical hollow form produced from a mixture as claimed in claim 1 or 2, wherein constituent (B) is from 1.5 to 20% by weight, preferably from 2 to 15% by weight, of a polyarylene sulfone and/or a polyarylene sulfide sulfoxide sulfone copolymer.

4. A cylindrical hollow form produced from a mixture as claimed in one or more of claims 1 to 3, wherein constituent (B) is a polyarylene containing recurring units of the formula
[-(S-E-)a-(-SO-E)b-(SO₂-E)c-] (X)
where E, independently of one another, is phenylene, naphthylene or biphenylene, b and c, independently of one another, are from above 0 to 1 and a is from 0 to less than 1, with the proviso that the total of a + b + c is equal to 1 and if sulfur links (-S-) are present, further -SO- and -SO₂- links, at least, are also present.

5. The cylindrical hollow form produced from a mixture as claimed in any one of claims 1 to 4, wherein constituent (B) is a polyphenylene sulfone containing recurring units of the formulae 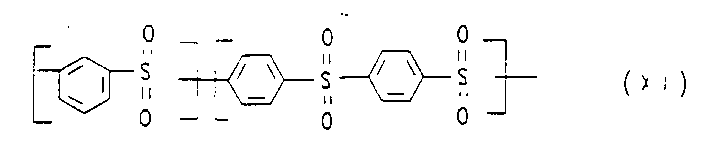 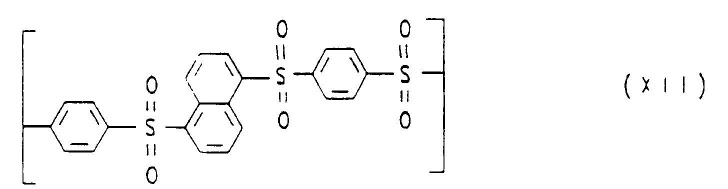 or

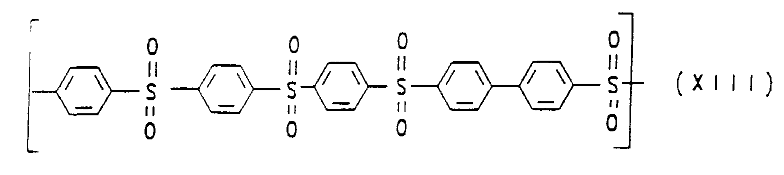

6. A cylindrical hollow form produced from a mixture as claimed in any one of claims 1 to 5, wherein constituent (B) is an oxidized polyphenylene sulfide of the formula 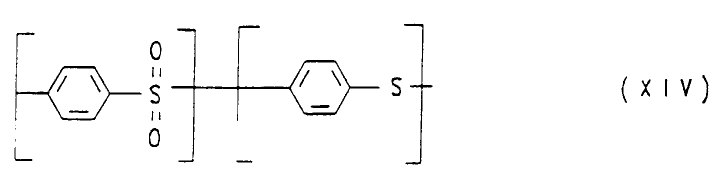 in which at least 65% of the sulfur atoms have been oxidized to sulfone groups.

7. A cylindrical hollow form produced from a mixture as claimed in one or more of claims 1 to 6, wherein the particle size of the oxidized polyarylene sulfide is from 3·10⁻⁶ to 300·10⁻⁶ m.

8. A cylindrical hollow form produced from a mixture as claimed in one or more of claims 1 to 7, wherein the content of filler/fillers is from 5 to 13% by weight.

9. A cylindrical hollow form produced from a mixture as claimed in one or more of claims 1 to 8 consisting of a mixture of from 85 to 98% by weight of polytetrafluoroethylene and from 2 to 15% by weight of polyphenylene sulfone.

10. A cylindrical hollow form produced from a mixture as claimed in one or more of claims 1 to 9 consisting of a mixture of from 85 to 98% by weight of polytetrafluoroethylene and from 2 to 15% by weight of polyphenylene sulfide sulfoxide sulfone copolymers.

11. A process for producing a cylindrical hollow form by mixing from 75 to 99% by weight of polytetrafluoroethylene and from 1 to 25% by weight of an oxidized polyarylene sulfide as described in claim 1, extruding the mixture to give a form having the shape of a pipe or tube, during which operation the fluoropolymers flow but do not melt, heating the preformed product to from 100 to 350°C to evaporate the additive present in the fluoropolymer paste resin, sintering the preform at from 260 to 470°C for from 10 seconds to 20 minutes to give a homogeneous product and then, if desired, post-treating this at a temperature of from 260 to 470°C for from 5 minutes to 24 hours.

12. The process as claimed in claim 11, wherein the paste-extrusion process is used.

13. The use of a cylindrical hollow form as claimed in one or more of claims 1 to 10 for producing a pressure-resistant Bowden cable.

14. A Bowden cable made from an extruded tube and from a metal cable within the extruded tube, where the cable is movable within the tube and is provided with a lubricant, wherein the sheath of the metal cable is a cylindrical hollow form made from an abrasion-resistant fluoropolymer mixture as given in one or more of claims 1 to 10.

## Revendications

1. Forme creuse cylindrique extrudée, préparée à partir d'un mélange de polymère fluoré composé de :
A) 75 à 99 % en poids d'au moins un polymère fluorocarboné ;
B) 1 à 25 % en poids d'au moins un poly(sulfure darylène) oxydé qui est un système polyarylène linéaire ou ramifié (Mw 4000 à 200000) avec l'unité répétitive de formule
-[(Ar¹)_{d}-X]ₑ-[(Ar²)ᵢ-Y]ⱼ-[(Ar³)ₖ-Z)ₗ-[(Ar⁴)ₒ-W]ₚ- (IX)
contenant au moins un groupe S et/ou SO et/ou SO₂ en tant qu'élément de liaison et présentant une résistance à la chaleur adéquate pour les différents polymères fluorés mis en oeuvre, où Ar¹, Ar², Ar³, Ar⁴, W, X, Y et Z sont indépendamment les uns des autres identiques ou différents, les indices n, m, i, j, k, 1, o et p sont des entiers de 0 à 4, dont la somme doit être égale à au moins 2, Ar¹, Ar², Ar³ et Ar⁴ représentent des systèmes arylènes simples ou reliés directement par l'intermédiaire des positions para, méta ou ortho possédant de 6 à 18 atomes de carbone, et W, X, Y et Z représentent des groupes de liaison choisis parmi -SO₂-, -S-, -SO-, -CO-, -CO₂-, des groupes alkyle ou alkylidène avec 1 à 6 atomes de carbone ; à la condition que les polymères de la classe des polyéther sulfones soient exclus ; et, par rapport à la somme de A) + B),
C) de 0 à 15 % en poids d'une charge.

2. Forme creuse cylindrique préparée à partir d'un mélange selon la revendication 1, caractérisée en ce que le polymère fluorocarbcné est le polytétrafluoréthylène.

3. Forme creuse cylindrique préparée à partir d'un mélange selon la revendication 1 ou 2, caractérisée en ce que le composant (B) est présent en une quantité de 1,5 à 20 % en poids, de préférence de 2 à 15 % en poids, d'une polyarylène sulfone et/ou d'un copolymère de sulfure/sulfoxyde/sulfone de polyarylène.

4. Forme creuse cylindrique préparée à partir d'un mélange selon une ou plusieurs des revendications 1 à 3, caractérisée en ce que le composant (B) est un polyarylène comportant des unités répétitives de formule
[-(S-E-)ₐ-(-SO-E)_{b}-(SO₂-E)_{c}-] (X)
dans laquelle les E représentent indépendamment les uns des autres un phénylène, un naphtylène ou un biphénylène, b et c représentent indépendamment l'un de l'autre des valeurs de 0 à 1 et a prend des valeurs comprises entre 0 et unférieure à 1, à la condition que la somme de a + b + c soit égale à 1 et en présence éventuelle des liaisons de soufre (-S-), d'autres liaisons -SO- et -SO₂- sont au moins présentes.

5. Forme creuse cylindrique préparée à partir d'un mélange selon une ou plusieurs des revendications 1 à 4, caractérisée en ce que le composant (B) est une polyphénylène sulfone comportant des unités répétitives des formules

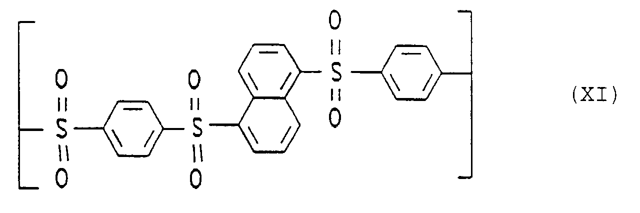

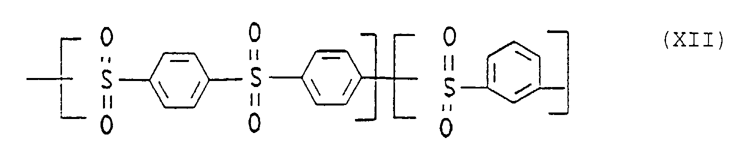

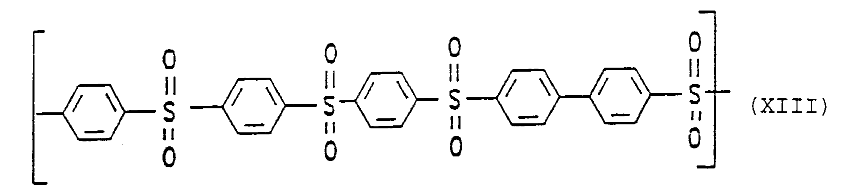

6. Forme creuse cylindrique préparée à partir d'un mélange selon une ou plusieurs des revendications 1 à 5, caractérisée en ce que le composant (B) est un sulfure de polyphénylène oxydé de la formule 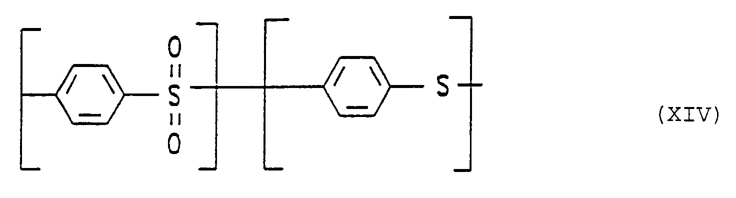 dans laquelle 65 % au moins des atomes de soufre sont oxydés pour donner des groupes sulfone.

7. Forme creuse cylindrique préparée à partir d'un mélange selon une ou plusieurs des revendications 1 à 6, caractérisée en ce que la granulométrie des poly(sulfures d'arylène) oxydés est comprise entre 3·10⁻⁶ et 300·10⁻⁶ m.

8. Forme creuse cylindrique préparée à partir d'un mélange selon une ou plusieurs des revendications 1 à 7, caractérisée en ce que la teneur en charge(s) est comprise entre 5 et 13 % en poids.

9. Forme creuse cylindrique préparée à partir d'un mélange selon une ou plusieurs des revendications 1 à 8, composé d'un mélange de 85 à 98 % en poids de polytétrafluoréthylène et de 2 à 15 % en poids de poly(phénylène sulfone).

10. Forme creuse cylindrique préparée à partir d'un mélange selon une ou plusieurs des revendications 1 à 9, composé d'un mélange de 85 à 98 % en poids de polytétrafluoréthylène et de 2 à 15 % en poids de copolymère de sulfure/sulfoxyde/sulfone de polyphénylène.

11. Procédé de préparation d'une forme creuse cylindrique par mélange de 75 à 99 % en poids de polytétrafluoréthylène et de 1 à 25 % en poids d'un poly(sulfure d'arylène) oxydé tel que décrit dans la revendication 1, extrusion du mélange sous la forme d'un tube ou d'une gaine, les polymères fluorés ne présentant pas de fusion mais un fluage, chauffage du produit préformé à une température de 100 à 350 °C en vue d'évaporer l'adjuvant présent dans le polymère fluoré sous forme de pâte, frittage du préformé à une température de 260 à 470 °C pendant une durée de 10 secondes à 20 minutes pour obtenir un produit homogène, suivi le cas échéant d'un traitement ultérieur à une température de 260 à 470 °C pendant une durée de 5 minutes à 24 heures.

12. Procédé selon la revendication 11, caractérisé en ce que l'on travaille suivant le procédé d'extrusion de pâte.

13. Utilisation de la forme creuse cylindrique selon une ou plusieurs des revendications 1 à 10, pour préparer un câble Bowden résistant à la pression.

14. Câble Bowden composé d'une gaine extrudée et d'un câble métallique à l'intérieur de la gaine extrudée, le câble étant mobile à l'intérieur de ladite gaine et muni d'un agent lubrifiant, caractérisé en ce que l'enveloppe du câble métallique est une forme creuse cylindrique préparée d'un mélange de polymères fluorés résistant à l'abrasion selon une ou plusieurs des revendications 1 à 10.
